# EUROPÄISCHE PATENTANMELDUNG

(11) **EP 1 770 373 A1**
(43) Veröffentlichungstag der Anmeldung: **04.04.2007**
(21) Anmeldenummer: 06018625.1
(22) Anmeldetag: 06.09.2006
(51) Int. Cl.: G01D 5/245, G01D 5/249

(54) **Absolutes Positionsmesssystem**

(30) Priorität: 30.09.2005 DE 102005047009
(71) Anmelder: Bosch Rexroth Mechatronics GmbH, 97424 Schweinfurt (DE)
(72) Erfinder: Reusing, Günter, Dr., 97464 Niederwerrn (DE)

(57) **Zusammenfassung**

Bei einem quasiabsoluten Positionsmesssystem sind an der Maßverkörperung (12) die Absolutmarkierungen (14) zwischen den Inkrementalmarkierungen (16) angeordnet, um Platz zu sparen.

## Beschreibung

Die Erfindung betrifft ein absolutes Positionsmesssystem gemäß dem Oberbegriff von Anspruch 1 und ein Verfahren zu dessen Herstellung.

Derartige Positionsmesssysteme sind beispielsweise aus der EP 1 052 480 B1 bekannt. Dort ist ein Positionsmesssystem gezeigt, dass in ein Linearwälzlager, bestehend aus einer Führungsschiene und einem Laufwagen, integriert ist. Die Maßverkörperung wird von einem Maßband aus Stahl gebildet, das in Längsrichtung der Führungsschiene straff gespannt ist. An dem Maßband sind periodisch angeordnete rechteckige Ausschnitte vorgesehen, welche die Inkrementalmarkierungen bilden. Darüber hinaus sind Referenzmarkierungen vorgesehen, die vorbestimmte absolute Positionen an der Führungsschiene kennzeichnen. Gemäß einer ersten Ausführungsform sind die Absolutmarkierungen als Ausschnitte am Maßband ausgeführt. Gemäß einer zweiten Ausführungsform als Bohrungen in der Führungsschiene. In beiden Fällen sind die Referenzmarkierungen neben den Inkrementalmarkierungen angeordnet. Am Laufwagen ist eine Abtastvorrichtung angebracht, die sowohl die Inkremental- als auch die Absolutmarkierungen abtastet und daraus einen absoluten Positionswert bildet. Man spricht daher von einem quasiabsoluten Positionsmesssystem.

Aus der US 6 064 851 B1 ist ein weiteres Messsystem bekannt, das Inkremental- und Absolutmarkierungen aufweist, die ebenfalls nebeneinander angeordnet sind. Beide Markierungen sind derart ausgebildet, dass sie induktiv abgetastet werden können, beispielsweise in Form von Durchbrüchen oder Vertiefungen an der Maßverkörperung. Bei dieser Ausführungsform ist jeder Inkrementalmarkierun.g eine Absolutmarkierung zugeordnet, die eine binäre Information trägt. Mehrere benachbarte Markierungen ergeben zusammen einen eindeutigen Positionscode, der jeder Inkrementalmarkierung eine absolute Position entlang der Maßverkörperung zuordnet. Hierdurch kennt das Positionsmesssystem bereits nach dem Einschalten seine absolute Position, ohne dass ein Verfahren zur nächsten Referenzmarkierung notwendig ist. Durch die gemeinsame Verwendung von absoluten und inkrementellen Markierungen kann eine höhere Messgenauigkeit erreicht werden als mit einem ausschließlich absolut arbeitenden Messsystem, weil durch Interpolation der inkrementellen Messsignale eine höhere Messauflösung erreicht werden kann als es dem Abstand der Inkrementalmarkierungen entspricht.

Der Nachteil der beschriebenen Positionsmesssysteme besteht in der großen Breite der Maßverkörperung. Dies ist insbesondere dann nachteilig, wenn die Inkremental- und die Absolutmarkierungen zwischen den Laufbahnen eines Linearwälzlagers angeordnet werden sollen, da der Platz dort begrenzt ist.

Es ist daher Aufgabe der Erfindung ein Positionsmesssystem zu schaffen, dessen Maßverkörperung eine verringerte Breite aufweist. Diese Aufgabe wird durch die kennzeichnenden Merkmale von Anspruch 1 gelöst. Der Erfindung liegt die Erkenntnis zugrunde, dass der Raum zwischen den Inkrementalmarkierungen üblicherweise eine im Wesentlichen ebene Fläche bildet, die einen konstanten Abstand zur Abtastvorrichtung aufweist und somit gut abgetastet werden kann. Des weiteren steht zwischen den Inkrementalmarkierungen im Wesentlichen die gleiche Fläche zur Verfügung, welche die Inkrementalmarkierungen selbst einnehmen. Dies ist insbesondere dann der Fall, wenn die Ausnehmungen induktiv abgetastet werden, da nur dann näherungsweise sinusförmige Abtastsignale entstehen, die gut interpoliert werden können. Weiter ist durch die erfindungsgemäße Anordnung sichergestellt, dass die Absolutmarkierungen einer vorbestimmten Inkrementalmarkierung eindeutig zugeordnet sind. Es ist ausgeschlossen, dass die Inkremental- und Absolutmarkierungen in Messrichtung so ungünstig gegeneinander verschoben sind, dass die Zuordnung nicht mehr eindeutig ist.

Gemäß einer bevorzugten Ausführungsform sind die Ausnehmungen untereinander gleich und in einer Reihe angeordnet. Bei den Ausnehmungen kann es sich beispielsweise um Durchbrüche in einem Maßband handeln, die mittels Ätzen hergestellt sind. Es kann sich aber auch um Vertiefungen in einer massiven Maßverkörperung handeln, die ebenfalls mittels Ätzen oder spanabhebend hergestellt sind. Die bekannten rechteckigen Inkrementalmarkierungen werden bevorzugt, weil dazwischen eine kompakte insbesondere rechteckige Fläche vorhanden ist, die sich gut zum Aufbringen der Absolutmarkierungen eignet.

Das erfindungsgemäße Positionsmesssystem ist besonders vorteilhaft, wenn zwischen jeder Inkrementalmarkierung eine Absolutmarkierung angeordnet ist. In diesem Fall benötigen die Absolutmarkierungen besonders viel Platz. Der Platzeinspareffekt durch die erfindungsgemäße Anordnung ist daher besonders groß.

Die Absolutmarkierungen können eine binäre Information tragen, wobei die Informationen mehrerer benachbarter Absolutmarkierungen zusammen eine eindeutige absolute Positionsinformation ergeben. Binäre Absolutmarkierungen lassen sich besonders einfach herstellen, insbesondere einfacher als Markierungen, die einen höheren Informationsgehalt aufweisen. Sie können daher entsprechend einfach in dem begrenzten Raum zwischen den Inkrementalmarkierungen eingebracht werden.

Weiter können die Inkrementalmarkierungen induktiv und die Absolutmarkierungen nichtinduktiv von der Abtastvorrichtung abgetastet werden. Für die Messgenauigkeit beim Abtasten der Inkrementalmarkierungen ist es entscheidend, dass die Absolutmarkierungen das Inkrementalsignal nicht stören. Die vorliegenden Inkrementalmarkierungen in Form von Ausnehmungen sind besonders gut zur induktiven Abtastung geeignet. Die Absolutmarkierungen müssen daher derart ausgebildet sein, dass sie den Stromfluss in der elektrisch leitfähigen Maßverkörperung nicht beeinflussen. Hierfür sind Markierungen, die nichtinduktiv abtastbar sind, besonders geeignet.

Im Falle von magnetischen Absolutmarkierungen können die Bereiche zwischen den Ausnehmungen der Maßverkörperung mit unterschiedlicher Polung magnetisiert sein. Die Polung trägt somit eine binäre Information, die mit Hilfe von magnetoresistiven Sensoren, Hall-Sensoren o. ä. abgelesen werden kann. Weder durch das Einbringen der magnetischen Markierungen noch durch das Ablesen derselben wird das induktive Abtasten der Inkrementalmarkierungen beeinflusst.

Ähnliches trifft auf optische Markierungen zu. Hier kann die Oberfläche der Maßverkörperung zwischen den Inkrementalmarkierungen mit unterschiedlichen Reflexionseigenschaften bezüglich optischer Strahlung ausgestattet sein. Dies kann beispielsweise dadurch geschehen, dass die metallische und somit reflektierende Maßverkörperung mittels Laserstrahlen örtlich geschwärzt wird. Derartige optische Markierungen tragen wiederum eine binäre information, die mit Hilfe von optischen Strahlen abgetastet werden kann. Auch in diesem Fall wird die induktive Abtastung der Inkrementalmarkierungen weder durch das Vorhandensein der optischen Markierungen noch durch deren Abtastung beeinflusst.

Aus dem Vorstehenden ergibt sich, dass die Abtastvorrichtung zwei getrennte Sensoren zum Abtasten der Inkremental- und Absolutmarkierungen aufweisen kann, da diese nach unterschiedlichen physikalischen Prinzipien arbeiten sollen. Diese Sensoren sind vorzugsweise in Messrichtung hintereinander angeordnet, damit sie sich bei ihrer Arbeit nicht gegenseitig beeinflussen. Aufgrund der periodischen Struktur der Inkrementalmarkierungen ist der Abstand der beiden Sensoren im Wesentlichen ohne Belang. Einzig die Phasenlage der vorzugsweise sinusförmigen Inkrementalsignale in Relation zu den Absolutsignalen muss bei der Berechnung des absoluten Positionsmesswerts berücksichtigt werden. An dieser Stelle sei darauf hingewiesen, dass die Absolut- und die Inkrementalsensoren in Messrichtung an der gleichen Stelle angeordnet sein können, wenn dies aus Platzgründen erforderlich ist. Es kann beispielsweise daran gedacht sein, die Sensoren über- oder nebeneinander anzuordnen.

Es ist vorteilhaft, wenn die Absolutmarkierungen exakt mittig zwischen den Inkrementalmarkierungen angeordnet sind. Auf diese Weise können die Absolutmarkierungen besonders breit ausgeführt werden, wodurch bei deren Abtastung ein besonders starkes Signal entsteht. Diese Aufgabe kann bei einer erfindungsgemäßen Maßverkörperung dadurch gelöst werden, dass die Inkrementalmarkierungen während der Herstellung der Absolutmarkierungen abgetastet werden oder dass die. Absolutmarkierungen während der Herstellung der Inkrementalmarkierungen abgetastet werden.

Dieses Verfahren lässt sich besonders einfach durchführen, wenn die Erfindung in Verbindung mit dem eingangs beschriebenen Linearwälzlager verwendet wird. In diesem Fall wird man zuerst eine Führungsschiene mit Inkrementalmarkierungen herstellen. Anschließend wird eine Vorrichtung zum Aufbringen der Absolutmarkierungen auf die Maßverkörperung, nämlich die Führungsschiene, mit dem Laufwagen verbunden, an dem bereits die Abtastvorrichtung zum Abtasten der Inkrementalmarkierungen angebracht ist. Die Vorrichtung ist somit in Relation zur Maßverkörperung linearbeweglich geführt, wenn der Laufwagen auf der Führungsschiene läuft. Der Abstand zwischen Maßverkörperung und Vorrichtung unterliegt während dem Verfahren des Laufwagens nur geringsten Schwankungen. Die Vorrichtung wird nun entlang der Führungsschiene verfahren, wobei diese unter Auswertung der Abtastsignale so gesteuert wird, dass die Absolutmarkierungen in der gewünschten Relation zu den Inkrementalmarkierungen aufgebracht werden.

Die Erfindung wird im Folgenden anhand der beigefügten Zeichnungen beschreiben werden. Es stellt dar:
- Fig. 1: ein Linearwälzlager mit einem erfindungsgemäßen Positionsmesssystem; und
- Fig. 2: die Maßverkörperung des Positionsmesssystems gemäß Fig.1

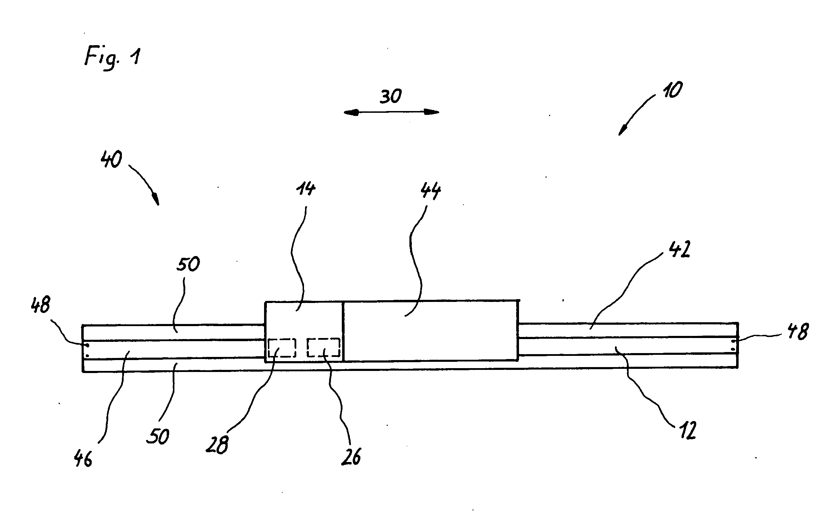

In Fig. 1 ist ein erfindungsgemäßes Positionsmesssystem 10 grobschematisch dargestellt. Es ist in ein Linearwälzlager 40, bestehend aus einer Führungsschiene 42 aus Stahl und einem Laufwagen 44, integriert. Die Maßverkörperung 12 in Form eines Maßbandes 46 aus etwa 0,3 mm dickem Stahlblech ist in Längsrichtung 30 der Führungsschiene 42 straff gespannt. An den Enden des Maßbandes 46 sind Punktschweißungen 48 vorgesehen, mit denen das Maßband 46 in gespanntem Zustand an der Führungsschiene befestigt ist.

Ober- und unterhalb des Maßbandes 46 sind Laufbahnen 46 für die nicht dargestellten Wälzkörper angebracht, die im Laufwagen 44 endlos umlaufen, so dass dieser an der Führungsschiene längsbeweglich abgestützt ist. Der Abstand der Laufbahnen 50 bestimmt die maximale Breite der Maßverkörperung 12.

Am Laufwagen 44 ist eine Abtastvorrichtung 14 angebracht, in der mehrere Sensoren 26; 28 zum Abtasten des Maßbandes 46 vorgesehen sind. Die Abtastvorrichtung wird vom Laufwagen 44 in Relation zum Maßband so geführt, dass der Abstand zwischen den Sensoren 26; 28 und dem Maßband im Wesentlichen konstant ist.

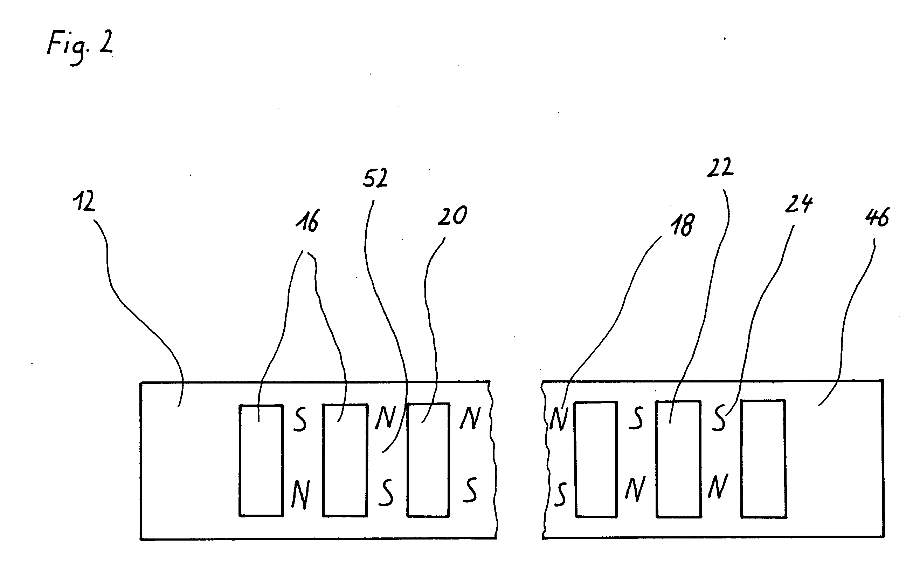

In Fig. 2 ist das Maßband 46 vergrößert dargestellt. Es umfasst Inkrementalmarkierungen 16 in Form von Ausnehmungen 20 , die als rechteckige Durchbrüche 22 ausgeführt sind. Die Durchbrüche 22 sind untereinander alle gleich und weisen eine Breite von 0,5 mm auf. Der Abstand der Durchbrüche beträgt ebenfalls 0,5 mm. Die Durchbrüche 22 sind mittels Ätzen sehr genau mit geringem vorbestimmten Untermaß hergestellt, so dass sich im gespannten Zustand des Maßbandes 46 eine Teilungsperiode von exakt 1,0 mm ergibt. Der Inkrementalsensor 26 zum Abtasten der Inkrementalmarkierungen 16 ist gemäß der EP 1 164 358 B1 ausgeführt, die hiermit in vollem Umfang in Bezug genommen wird. Dieser Inkrementalsensor erzeugt in Verbindung mit der vorliegenden Maßverkörperung 12 nahezu exakt periodische, sinusähnliche Signale, die mittels- eines Interpolations-Auswerteverfahrens mit dem Faktor 1000 unterteilt werden können, so dass das vorliegende Positionsmesssystem 10 eine Auflösung von 0,001 mm erreicht.

Zwischen den rechteckigen Durchbrüchen 22 sind magnetische Markierungen 24 angebracht, welche die Absolutmarkierungen 18 bilden. Das Maßband 46 ist hierfür aus einem hartmagnetischem Stahl, beispielsweise einem martensitischen Stahl, hergestellt, damit die Magnetisierung dauerhaft erhalten bleibt. Die einzelnen magnetischen Markierungen 24 sind quer zur Messrichtung 30 wechselnd polarisiert, so dass sie eine binäre Information tragen. Einem Nordpol (N) einer magnetischen Markierung 24 am oberen Rand des Maßbandes 46 ist die Information logisch 1 zugewiesen, einem Südpol am oberen Rand des Maßbandes 46 entsprechend die Information logisch O. Die Absolutmarkierungen, die beispielhaft in Fig. 2 dargestellt sind, tragen also die Information:
011 ... 100

Die unteren Ränder des Maßbandes 46 weisen immer die entgegengesetzte Polung zum oberen Rand auf. Die magnetischen Markierungen 24 sind gemäß dem oben beschriebenen Verfahren hergestellt, wobei die Vorrichtung zum Aufbringen der magnetischen Markierungen ein Elektromagnet ist. Die Polung des Elektromagnets wird anhand der Signale des Inkrementalsensors 26 so gesteuert, dass die Stege 52 des Maßbandes 46 eindeutig magnetisiert sind. An dieser Stelle sei darauf hingewiesen, dass die Magnetpolung auch in jede andere Raumrichtung ausgerichtet sein kann, soweit die unterschiedlichen Polungen durch einen entsprechenden Sensor unterscheidbar sind.

Die Absolutmarkierungen bilden eine Pseudozufallszahlenfolge und werden entsprechend der US 4 009 377, die hiermit in vollem Umfang in Bezug genommen wird, ausgewertet. Die Zahlenfolge ist also so gewählt, dass mehrere benachbarte Absolutmarkierungen zusammen eine eindeutige absolute Positionsinformation ergeben. Der Absolutsensor 28 besteht aus mehreren magnetoresistiven Elementen, die mit einem Abstand von 1,0 mm entsprechend der Inkrementalteilung in Messrichtung 30 hintereinander angeordnet sind. Die Anzahl der magnetoresistiven Elemente ist von der Länge des Maßbandes abhängig und wird so gewählt, dass alle Absolutmarkierungen, die zur eindeutigen Identifizierung einer Absolutposition notwendig sind, gleichzeitig abgelesen werden können.

Gemäß Fig. 1 sind der Inkrementalsensor 26 und der Absolutsensor 28 in Messrichtung 30 hintereinander angeordnet. Die magnetoresistiven Elemente des Absolutsensors 28 werden immer dann abgefragt, wenn sie sich genau über den Absolutmarkierungen 18, d.h. über den Stegen 52 des Maßbandes 46, befinden. Dies ist immer dann der Fall, wenn die Sinus-Cosinus-Signale des Inkrementalsensors 26 eine bestimmte Phasenlage aufweisen, die bei der Erstinbetriebnahme des Positionsmesssystems ermittelt wird.

Gemäß einer verbesserten Ausführungsform können auch mehrere Gruppen der oben beschriebenen magnetoresistiven Elemente vorgesehen sein, die um einen ganzzahligen Bruchteil der Messteilung zueinander versetzt angeordnet sind. Somit befindet sich unabhängig von der Stellung der Abtastvorrichtung 14 immer eine Gruppe über den Stegen 52 des Maßbandes 46. Dadurch ist sicher gestellt, dass nach dem Einschalten des Positionsmesssystems 10 sofort eine absolute Position ermittelt werden kann, ohne die Abtastvorrichtung 14 zu verfahren.

### Bezugszeichenliste

- 10: Positionsmesssystem
- 12: Maßverkörperung
- 14: Abtastvorrichtung
- 16: Inkrementalmarkierung
- 18: Absolutmarkierung
- 20: Ausnehmung
- 22: rechteckiger Durchbruch
- 24: magnetische Markierung
- 26: Inkrementalsensor
- 28: Absolutsensor
- 30: Messrichtung
- 40: Linearwälzlager
- 42: Führungsschiene
- 44: Laufwagen
- 46: Maßband
- 48: Punktschweißung
- 50: Laufbahn
- 52: Steg

## Patentansprüche

1. Positionsmesssystem (10) mit einer Maßverkörperung (12), die Inkremental- und Absolutmarkierungen (16; 18) aufweist und einer relativ dazu beweglichen Abtastvorrichtung (14), wobei die Inkrementalmarkierungen (16) von periodisch angeordneten Ausnehmungen (20) an der Maßverkörperung (12) gebildet werden,
**dadurch gekennzeichnet, dass** die Absolutmarkierungen (18) zwischen den Ausnehmungen (20) der Maßverkörperung (12) angeordnet sind.

2. Positionsmesssystem nach Anspruch 1,
**dadurch gekennzeichnet, dass** die Ausnehmungen (20) untereinander gleich, vorzugsweise rechteckig, und in einer Reihe angeordnet sind.

3. Positionsmesssystem nach Anspruch 2,
**dadurch gekennzeichnet, dass** zwischen jeder Ausnehmung (20) eine Absolutmarkierung (18) angeordnet ist.

4. Positionsmesssystem nach Anspruch 3,
**dadurch gekennzeichnet, dass** jede Absolutmarkierung (20) eine binäre Information trägt, wobei die Informationen mehrerer benachbarter Absolutmarkierungen (20) zusammen eine eindeutige absolute Positionsinformation ergeben.

5. Positionsmesssystem nach einem der vorherigen Ansprüche,
**dadurch gekennzeichnet, dass** die Inkrementalmarkierungen (16) induktiv und die Absolutmarkierungen (18) nichtinduktiv, vorzugsweise magnetisch oder optisch, von der Abtastvorrichtung (14) abgetastet werden.

6. Positionsmesssystem nach einem der vorherigen Ansprüche,
**dadurch gekennzeichnet, dass** die Abtastvorrichtung (14) zwei getrennte Sensoren (26; 28) zur Abtastung der Inkremental- und der Absolutmarkierungen (16; 18) aufweist, die in Messrichtung (30) hintereinander angeordnet sind.

7. Verfahren zur Herstellung einer Maßverkörperung nach einem der vorherigen Ansprüche,
**dadurch gekennzeichnet, dass** die Inkrementalmarkierungen (16) während der Herstellung der Absolutmarkierungen (18) abgetastet werden oder dass die Absolutmarkierungen (18) während der Herstellung der Inkrementalmarkierungen (16) abgetastet werden.
